# EUROPEAN PATENT SPECIFICATION

(11) **EP 3 626 664 B1**
(45) Date of publication and mention of the grant of the patent: **18.05.2022**
(21) Application number: 18195966.9
(22) Date of filing: 21.09.2018
(51) Int. Cl.: B66B 1/34

(54) **METHOD AND ELEVATOR GROUP CONFIGURED FOR ESTABLISHING A SECURE DATA COMMUNICATION BETWEEN A PLURALITY OF CONTROLLERS IN EACH OF A PLURALITY OF ELEVATORS OF THE ELEVATOR GROUP**
VERFAHREN UND AUFZUGSGRUPPE ZUM AUFBAU EINER SICHEREN DATENKOMMUNIKATION ZWISCHEN EINER VIELZAHL VON STEUERGERÄTEN IN JEDEM EINZELNEN DER VIELEN AUFZÜGE DER AUFZUGSGRUPPE
PROCÉDÉ ET GROUPE D'ASCENSEURS CONFIGURÉS POUR ÉTABLIR UNE COMMUNICATION SÉCURISÉE DE DONNÉES ENTRE UNE PLURALITÉ DE CONTRÔLEURS DANS CHACUNE D'UNE PLURALITÉ D'ASCENSEURS DU GROUPE D'ASCENSEURS

(43) Date of publication of application: 25.03.2020
(73) Proprietor: Inventio AG, 6052 Hergiswil (CH)
(72) Inventor: COLOMBANO, Claudio, 6375 Beckenried (CH)
(74) Representative: Inventio AG

(56) References cited:
- EP-A1- 1 535 874
- WO-A1-2013/151533
- US-A1- 2015 280 910
- US-B2- 9 276 740

## Description

The present invention relates to a method for establishing a secure data communication between a plurality of controllers in each of the plurality of elevators of an elevator group. Furthermore, the present invention relates to an elevator group comprising controllers configured for executing or controlling such method and to a computer program product configured for executing or controlling such method as well as to a computer readable medium comprising such computer program product stored thereon.

In large buildings, a plurality of elevators forming an elevator group may be provided for transporting crowds of passengers between various floors in the building. Therein, substantive logistics are required for suitably sharing transport capabilities of the plurality of elevators. Accordingly, while in single elevators controllers are provided for controlling motions of an elevator cabin in this single elevator, in the plurality of elevators such controllers in each of the elevators need to communicate with each other. For example, such communication may be necessary for functionalities like dispatching of elevator cabins within the elevator group or for performing critical group wide emergency services. Particularly, information about current destination floors, cabin calls, cabin occupancy, priority calls, etc. and potentially about any malfunctions in each of the elevators or about emergencies may have to be shared with the other elevators of the elevator group such that a security and/or an efficiency of the elevator group may be maximized. For example, an overall transport capacity of the elevator group may be maximised by organising elevator trips in a smart manner.

However, communication between controllers of plural elevators may be compromised. For example, unauthorised persons may hack the communication between the elevators and may then manipulate the elevators' operations. For example, a possible way to acquire unauthorised access to a communication network of an elevator group may be to tap on a communication system that each elevator uses to communicate with its peers. Specifically, an interface used for data communication between various controllers of elevators in an elevator group may be particularly sensitive since it is the main backbone that these controllers use to perform basically any operation including low level commands to a physical periphery or interference with emergency services. Because of its nature and its efficiency requirements, such communication backbone is generally fully trusted once authenticated, that is, no restriction applies and access to it implies full authorisation for all of its functionalities.

Conventionally, encryption as provided in documents EP 1535874 A1 and US 20150280910 A1 may be used for establishing a secure data communication between controllers of an elevator group.

However, in prior elevator systems, implementing such encryption may either require a complex management of encryption keys or may be vulnerable to security losses due to e.g. loss of or publication of encryption keys.

Accordingly, there may be a need for a method for establishing a secure data communication between controllers of a plurality of elevators of an elevator group which, on the one hand, may provide for superior data communication security and which, on the other hand, may be implemented easily and at low costs. Similarly, there may be a need for an elevator group comprising controllers being configured for implementing or controlling such method as well as for a computer program product configured for executing or controlling such method and a computer readable medium comprising such computer program product stored thereon.

Such needs may be met with the subject-matter of the independent claims. Advantageous embodiments are defined in the dependent claims as well as in the following specification.

According to a first aspect of the present invention, a method for establishing a secure data communication between a plurality of controllers in each of a plurality of elevators of an elevator group is proposed. Therein, the plurality of elevators has been initially installed without any encryption being established in communicating data between their controllers. According to the method, before commissioning the elevator group, an encryption establishing step is executed for establishing data encryption in future data communication between the plurality of controllers. The encryption establishing step comprises at least the following steps, preferably in the indicated order: First, a generation of a random encryption key pair in each of the controllers of the elevator group is initiated upon receiving a "prepare security" command. The encryption key pair comprises a private key and a public key. Each of the controllers then stores its generated private key in a protected area in a file system. Furthermore, each of the controllers advertises its identity and its public key to the controllers of all other elevators of the elevator group. Each of the controllers then stores the public keys obtained upon advertising from the other controllers in the elevator group. Subsequently, the encryption establishing step is finalised upon either lapsing of a predetermined time period since starting the encryption establishing step or upon occurrence of a finalising event. After finalizing the encryption establishing step, no obtaining and storing of further public keys is accepted in each of the controllers and future data communication between the plurality of controllers is established by encrypting a data communication package by a sending controller using the public encryption key of a receiving controller and decrypting the data communication package upon receiving it in the receiving controller using the private key stored in the receiving controller.

According to a second aspect of the invention, an elevator group comprising a plurality of elevators is proposed. Therein, each elevator has a controller, the controllers being configured for one of executing and controlling a method according to an embodiment of the first aspect of the invention.

According to a third aspect of the invention, a computer program product is proposed. The computer program product comprises computer readable instructions which, when performed by a processor of a controller in an elevator of an elevator group, instruct the controller to executing or controlling the method according to an embodiment of the first aspect of the invention.

According to a fourth aspect of the invention, a computer readable medium is proposed, the computer readable medium comprising a computer program product according to an embodiment of the third aspect of the invention stored thereon.

Ideas underlying embodiments of the present invention may be interpreted as being based, inter alia and without restricting the scope of the invention, on the following observations and recognitions.

As already briefly indicated in the introductory portion, controllers of elevators being members of the elevator group generally need to communicate with each other and such communication may be vulnerable to hacking and/or unauthorised manipulations.

A traditional way to protect against such threats may be a use of encryption in data communication between the plural controllers.

For example, encryption applying asymmetric keys may provide for a high level of communication security. A pair of asymmetric keys generally comprises one public key which may be distributed to communication partners and one private key which is to be kept secret. Therein, the public key of a recipient maybe used by a communication partner to encrypt data before sending them to the recipient. The private key may then be used by the recipient to decrypt such encrypted data upon receipt.

Using such encryption, each participant in a data communication on a network is uniquely identified and authorised by its key pair. Therefore, it is crucial that the secret key of a certain authorised member of the network is never revealed. If a secret key is compromised, it is then virtually possible to impersonate an authorised member of the network in order to perform unauthorised access to and manipulations of the other members.

A most simple way to implement encryption tasks may be defining one single key pair generally for all elevators of for example a certain product line or version of elevators. The secret key may be stored for example in a protected area of an operating system of an elevator controller. The public key is, in such scenario, the same for all controllers and is therefore known a priori by each of the communicating members of an elevator group.

Such simple approach may allow to generate only one executable image of a controller software that may then be deployed everywhere without additional security-related configuration requirements in the field or at production time. In other words, in such scenario, every controller would be able to communicate to any other controller of this type or version of controllers, independently from its location, since all controllers share the same encryption key pair. Apparently, such approach may provide logistic advantages.

However, while this approach may be simple, it may suffer from insufficient liability. For example, in case a private key is compromised at one of the controllers, then all controllers of a certain product line or version are compromised since they all share the same keys.

In an alternative approach, individual encryption key pairs may be generated for each of a multiplicity of controllers in multiple elevators. Such individual key pairs may be generated during fabrication of the elevators and the public keys of such key pairs may then have to be distributed to all communication partners. However, generating and distributing such multiplicity of individual keys implies complex key management.

On the one hand, insufficient liability should be avoided in an encryption approach. On the other hand, generating and managing a large number of key pairs already during fabrication of elevators and resulting complex key management logistics should also be avoided.

Therefore, briefly summarised, the approach proposed herein intends to provide a mechanism that creates encryption keys dynamically and stores them during commissioning time, i.e. after fabrication and installation of an elevator group. On the one hand, such dynamically generating of key pairs allows avoiding the liability issue mentioned above of having globally shared keys, as an individual key pair is dynamically generated for each controller in an elevator being member of an elevator group. Accordingly, when a single controller is compromised and its private key is revealed, the data communication with other controllers using other key pairs is not affected. On the other hand, the approach proposed herein may provide for similar advantages as described above with respect to the simple approach providing only a single key pair for all controllers, i.e. additional configuration and management of multiple keys at an elevator production time may generally be avoided.

In the approach described herein, a plurality of elevators forming an elevator group may be fabricated and installed without initially any encryption being established in the data communication between the controllers of these elevators. Accordingly, during this early phase, all controllers in this elevator group may communicate with each other. Particularly, no authorisation check between the communicating controllers is required. Thus, installation and preparation work for commissioning of the elevator group may be significantly simplified.

However, before commissioning the elevator group, i.e. before handing over the elevator group to a customer and starting normal operation of the elevator group in a serviced building, a so-called encryption establishing step is to be executed. In such encryption establishing step, the controllers in the elevator group are modified and specifically configured such that any subsequent data communication may use asymmetric encryption and may therefore be secure.

Specifically, the encryption establishing step is started by initiating a generation of random encryption key pairs. Such key pair generation is initiated upon receiving a so-called "prepare security" command, i.e. a command indicating that secure data communication shall be established for the future.

For example, the "prepare security" command may be generated by a technician using a user human machine interface (HMI). The technician may previously have performed end commissioning tasks, including for example installation tasks and/or configuration tasks, for the elevator group. Such commissioning tasks generally have to be completed before handing over the elevator group to a customer and starting normal operation thereof. Upon completing such commissioning tasks, the technician may then generate the "prepare security" command using for example a maintenance panel including an HMI. For such purpose, the technician typically has to be located within a restricted area of the elevator group, i.e. for example within a machine room of one of the elevators. As access to such restricted area is limited to authorised technicians, the technician's generating of the "prepare security" command may be assumed to be authorising the start of the encryption establishing step.

Alternatively, the "prepare security" command may be generated in other ways. For example, such command may be submitted via a network. Accordingly, it may be possible that such command is generated e.g. at an elevator remote control centre and is then transmitted towards the controllers in the elevator group. However, preferably, authorisation should be required for preparing the "prepare security" command. In other words, generally, safety measures should be implemented for guaranteeing that the "prepare security" command may exclusively be generated and submitted by an authorised person or instance.

Upon receiving the "prepare security" command, each of the controllers for the elevators in the elevator group starts generating a random encryption key pair. Such key pair comprises an individual public key for encrypting data and an associated individual private key for subsequent decrypting the data. The key generation should be "random", i.e. keys shall be generated in a randomised or at least quasi-randomised manner. This means that each controller should generate its key pair in a non-deterministic manner. Each controller may comprise an entropy source for generating such random key pair.

Upon having generated its key pair, each of the controllers stores its generated private key in a protected area in a file system. In other words, the private key which has to be kept secret may be stored in the controller in an area of a memory which is specifically protected against unauthorised access or manipulation. For example, the protected area of the file system may be secured by a firewall or similar technical means. Accordingly, the private keys may not be compromised and may only be accessible by the controller having generated this private key during the encryption establishing step.

Furthermore, upon having generated its key pair, each of the controllers advertises its identity and its public key to the controllers of all other elevators in the elevator group. In other words, while keeping its private key secret, a controller distributes its public key to all communication partners, i.e. to all other elevator controllers in the elevator group with which data exchange will be required during subsequent operation of the elevator group. Together with the public key, the controller also advertises its identity. Accordingly, the controllers of the other elevators receive both, the public key and the information about the identity of the controller having advertised this public key such that both parts of information may be associated with each other. The public keys and/or the information about the controller identity may be distributed between the elevator controllers via a network. Such networks may be hardwired or wireless.

Upon receiving the advertised public keys, each of the controllers stores the public keys obtained from the other controllers in the elevator group. In other words, each of the controllers in the elevator group receives public keys from all other controllers of the elevator group and stores them for example in a file system. These file systems do not necessarily have to be secured. Furthermore, information about the identity of the controller advertising one of the public keys may also be stored. Accordingly, upon future data communication, an elevator controller wanting to send data to another elevator controller may determine the public key to be used for data encryption based on the identity of the other elevator controller.

In order to avoid manipulations or misuse, the encryption establishing step has to be finalised, i.e. the phase in which elevator controllers except obtaining public keys from other elevator controllers of the elevator group has to be ended. Otherwise, if such phase would continue, for example a manipulator could be able to enter the data network between the elevator controllers and send its own public key to the members of the elevator group such that, subsequently, the elevator controllers of this elevator group would start communicating with this unauthorised manipulator.

Generally, the encryption establishing step may be finalised in two ways:
In a first alternative, the encryption establishing step may automatically end after a predetermined time period since starting the encryption establishing step has lapsed. Such predetermined time period may be long enough for completing a key exchange between all of the controllers in the elevator group. For example, the predetermined time period should be longer than 10 ms, preferably longer than 0.1s or longer than 0.5 s. However, the predetermined time period should be short enough for reducing any misuse or manipulation risk. For example, the predetermined time period may be less than an hour, preferably less than 1 min or less than 10 s or even less than 1 s.

In a second alternative, the encryption establishing step may be finalised upon occurrence of a specific finalising event. Such finalising event may for example be generated by a technician or by any technical means checking conditions within the elevator group.

For example, the finalising event may be an entering of a "secure" command entered by an authorised technician, such "secure" command indicating that a handshake process including exchanging public keys between all of the controllers has been successfully completed.

In other words, the technician may observe and check conditions within the elevator group and may then decide whether the encryption establishing step shall be finalised. For example, the technician may check status indications on one, several or all controllers of the elevator group, such status indications informing for example about a number of public keys received from other elevator controllers. Accordingly, the technician may determine whether all public keys have successfully been exchanged between the members of the elevator group. Having made such determination, the technician may enter the "secure" command.

For example, such command may be entered via a HMI included in one of the elevators in the elevator group. In case, the HMI is provided in a restricted area to which only authorised staff may have access, the authorisation of the technician is already given due to the fact that the technician may access the HMI. In case, no such local restriction is provided, entering the "secure" command may only be accepted upon a user having previously shown his authorisation for example during an authentication process.

By finalising the encryption establishing step only after a "secure" command has been entered by the authorised technician instead of automatically finalising the encryption establishing step after a predetermined time, the technician may personally check whether the handshake process between the elevator controllers has been successfully completed. Only if this is the case, the technician will enter the "secure" command for finalising the encryption establishing step.

After the encryption establishing step has been finalised, no further public keys may be obtained and stored by any of the controllers in the elevator group. Furthermore, future data communication between controllers being members of the elevator group shall only be enabled upon encrypting a data communication package by a sending controller using the public encryption key of a receiving controller. The receiving controller may then decrypt the encrypted data communication package upon receiving it by using its private key.

Overall, on the one hand, embodiments of the proposed method may enable simple installation and commissioning of elevators of an elevator group as, during such installation and commissioning period, the elevators may communicate in an unrestricted manner. On the other hand, manipulations of data communication between controllers in the elevator group may be avoided during normal operation of the elevator group as all data communication is encrypted and therefore safe after having dynamically generated encryption key pairs and having exchanged the public keys of these key pairs during the encryption establishing step. Furthermore, no complex global key management logistics for e.g. thousands of elevators are required, as the encryption key pairs for each individual elevator are not generated during elevator fabrication but are dynamically generated only for each out of a relatively small number of elevators comprised in the elevator group and will then be directly advertised to all other elevators in this elevator group forming future communication partners.

In an elevator group according to an embodiment of the second aspect of the invention, each elevator has a controller being configured for executing or controlling an embodiment of the proposed method. For such purpose, the controller may comprise a processor for processing data, a memory for storing data and a data interface for exchanging data with external devices such as with other elevator controllers. The controller may be programmable.

A computer program product according to an embodiment of the third aspect of the invention comprises computer readable instructions which, when performed by the processor of an elevator controller, instruct the controller to execute or control an embodiment of the proposed method. The computer program product may be programmed in any computer language.

The computer program product may be stored on a computer readable medium such as a flash memory, a CD, a DVD, a ROM, a PROM, an EPROM, etc. Alternatively, the computer program product may be stored on another computer or server or in a data cloud and may be downloaded for example via a network such as the Internet.

It shall be noted that possible features and advantages of embodiments of the invention are described herein partly with respect to a method for establishing a secure data communication between a plurality of controllers in an elevator group and partly with respect to an elevator group in which the controllers are configured for implementing such method. One skilled in the art will recognize that the features may be suitably transferred from one embodiment to another and features may be modified, adapted, combined and/or replaced, etc. in order to come to further embodiments of the invention.

In the following, advantageous embodiments of the invention will be described with reference to the enclosed drawings. However, neither the drawings nor the description shall be interpreted as limiting the invention.

Fig. 1 shows an elevator group comprising a plurality of elevators, each having a controller, according to an embodiment of the present invention.

Fig. 2 shows a flowchart for visualising steps of a method according to an embodiment of the present invention.

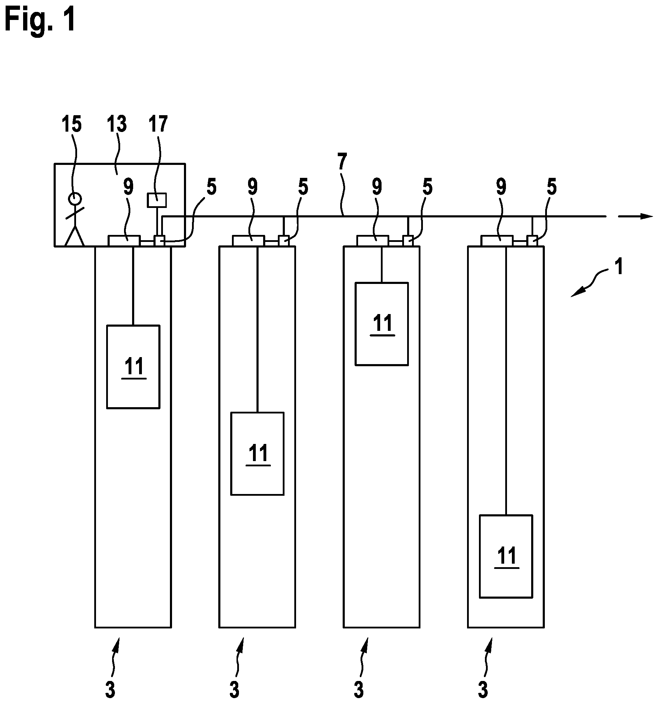

Fig. 1 shows an elevator group 1 comprising a plurality of elevators 3. Each elevator 3 comprises a controller 5. The controllers 5 of all elevators 3 in the elevator group 1 communicate with each other over a data communication network 7. The controllers 5 each control an operation of a respective drive engine 9 for displacing an elevator cabin 11. As schematically and exemplarily shown for the leftmost elevator 3, the controller 5 may be connected to a human-machine-interface 17. Both, the controller 5 and the human-machine-interface 17 may be enclosed in a machine room 13 to which only authorised staff such as an authorised technician 15 may have access.

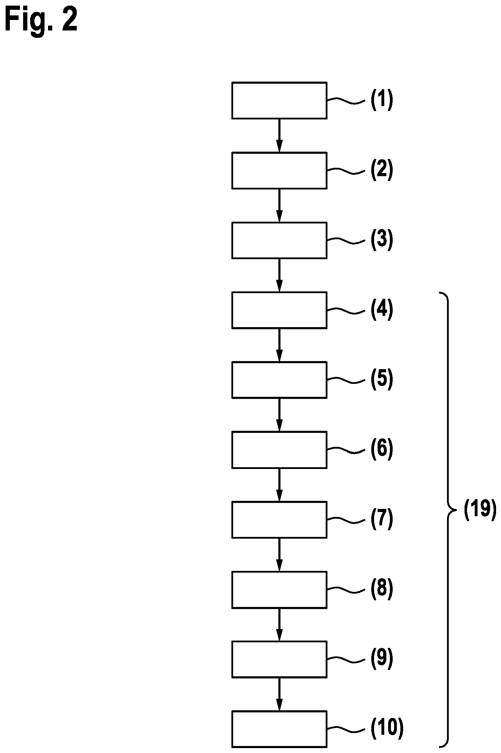

The flowchart shown in Fig. 2 comprises plural steps (1) to (10). Some of these steps relate to preparatory actions before establishing the secure data communication in an elevator group whereas others steps (4) - (10) relate to method steps in establishing the secure data communication during an encryption establishing step (19) in accordance with an embodiment of the inventive method.

In a first step (1), multiple controllers for multiple elevators of an elevator group are delivered to the field without any security provisions being in place. Therefore, there is no authorization check between controllers when they try to establish communication among themselves.

In a second step (2), the elevators of the elevator group are normally installed. Also during this phase, no security provisions are in place and, again, no authorization check is in place that might also interfere with the installation and acceptance process.

In a third step (3), a technician performs end-commissioning tasks before handing over the elevator system to a customer. Before doing that, the technician checks that the elevator group is fully functional and connected.

In a next step (4), the technician issues a "Prepare Security" command, via a user interface, in order to start the encryption establishing step and initiate the automatic generation of key pairs on all elevator controllers.

Subsequently, in step (5), each controller generates a random key pair that will be used for authentication and authorization. Entropy sources should be available to generate sufficiently random keys.

In a following step (6), each controller stores its secret private key in a protected area of the file system and advertises itself and its public key to all members of the elevator group.

Then, in step (7), each controller stores the public keys of each other members of the elevator group it communicates with. This will be used to authenticate peers on the elevator network.

In step (8), the elevators perform a handshake in order to validate completion of the procedure e.g. by displaying on a user interface the members whose public key has been successfully acquired.

In step (9), when all elevators confirm a correct acquisition of public keys of all other members, the technician will select and issue, via a user interface, a "Secure" command.

Finally, in step (10), the "Secure" command is confirmed by each of the controllers on their respective user interface, and security within group's data communication is consolidated. From this moment on, all controllers will use the fresh and random key material generated in order to perform secure communication with all other members of the elevator group.

Finally, in order to avoid any misinterpretations, it shall be noted that this invention shall mainly focus on guaranteeing security data communication by applying dynamic keys on a group of controllers which is supposed to be fix and unchanging in a certain building. Its main purpose is to harden a preferably continuous 24/7 high performance and traffic intensive critical communication backbone among said controllers (also known as middleware).

Finally, it should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

### List of reference signs

- 1: elevator group
- 3: elevator
- 5: controller
- 7: network
- 9: drive engine
- 11: elevator cabin
- 13: machine room
- 15: technician
- 17: human-machine-interface
- 19: encryption establishing step

## Claims

1. Method for establishing a secure data communication between a plurality of controllers (5) in each of a plurality of elevators (3) of an elevator group (1),
wherein the plurality of elevators (3) has been initially installed without any encryption being established in communicating data between their controllers (5),
wherein before commissioning the elevator group (1), an encryption establishing step (19) is executed for establishing data encryption in future data communication between the plurality of controllers (5), the encryption establishing step (19) comprising:
- initiating, upon receiving a "prepare security" command, generation of a random encryption key pair in each of the controllers (5) of the elevator group (1), the encryption key pair comprising a private key and a public key;
- each of the controllers (5) storing its generated private key in a protected area in a file system and advertising its identity and its public key to the controllers (5) of all other elevators (3) of the elevator group (1);
- each of the controllers (5) storing the public keys obtained upon advertising from the other controllers (5) in the elevator group (1);
- finalizing the encryption establishing step (19) upon one of lapsing of a predetermined time period since starting the encryption establishing step and occurrence of a finalising event;
wherein, after finalizing the encryption establishing step (19), no obtaining and storing of further public keys is accepted in each of the controllers (5) and future data communication between the plurality of controllers (5) is established by encrypting a data communication package by a sending controller (5) using the public encryption key of a receiving controller (5) and decrypting the data communication package upon receiving it in the receiving controller (5) using the private key stored in the receiving controller(5).

2. Method of claim 1, wherein the predetermined time period is less than an hour.

3. Method of claim 1, wherein the finalising event is an entering of a "secure" command entered by an authorized technician indicating that a handshake process including exchanging public keys between all of the controllers (5) has been successfully completed.

4. Method of one of the preceding claims, wherein for preparing the "prepare security" command, authorization is required.

5. Method of one of the preceding claims, wherein the "prepare security" command is prepared by a technician (15) via entering a command into a human-machine-interface (17) located in a machine room (13) of one of the elevators (3).

6. Elevator group (1) comprising a plurality of elevators (3), each elevator (3) having a controller (5), the controllers (5) being configured for one of executing and controlling a method according to one of claims 1 to 5.

7. Computer program product comprising computer readable instructions which, when performed by a processor of a controller (5) in an elevator (3) of an elevator group (1), instruct the controller (5) to one of executing and controlling the method according to one of claims 1 to 5.

8. Computer readable medium comprising a computer program product according to claim 7 stored thereon.

## Patentansprüche

1. Verfahren zum Herstellen einer sicheren Datenkommunikation zwischen mehreren Steuerungen (5) in jedem von mehreren Aufzügen (3) einer Aufzugsgruppe (1), wobei die mehreren Aufzüge (3) anfänglich installiert wurden, ohne dass irgendeine Verschlüsselung bei einem Kommunizieren von Daten zwischen ihren Steuerungen (5) hergestellt wurde, wobei vor einer Inbetriebnahme der Aufzugsgruppe (1) ein Verschlüsselungsherstellungsschritt (19) zum Herstellen einer Datenverschlüsselung in zukünftiger Datenkommunikation zwischen den mehreren Steuerungen (5) ausgeführt wird, der Verschlüsselungsherstellungsschritt (19) umfassend:
- Initiieren, nach Empfangen eines "Sicherheit vorbereiten"-Befehls, einer Erzeugung eines zufälligen Verschlüsselungsschlüsselpaares in jeder der Steuerungen (5) der Aufzugsgruppe (1), wobei das Verschlüsselungsschlüsselpaar einen privaten Schlüssel und einen öffentlichen Schlüssel umfasst;
- jede der Steuerungen (5) ihren erzeugten privaten Schlüssel in einem geschützten Bereich in einem Dateisystem speichert und ihre Identität und ihren öffentlichen Schlüssel gegenüber den Steuerungen (5) aller anderen Aufzüge (3) der Aufzugsgruppe (1) ankündigt;
- wobei jede der Steuerungen (5) die öffentlichen Schlüssel speichert, die bei Ankündigen von den anderen Steuerungen (5) in der Aufzugsgruppe (1) erhalten werden;
- Abschließen des Verschlüsselungsherstellungsschritts (19) bei Ablaufen einer zuvor bestimmten Zeitspanne seit einem Starten des Verschlüsselungsherstellungsschritts oder eines Auftretens eines Abschlussereignisses;
wobei nach Abschließen des Verschlüsselungsherstellungsschritts (19) kein Erhalten und Speichern weiterer öffentlicher Schlüssel in jeder der Steuerungen (5) akzeptiert wird und zukünftige Datenkommunikation zwischen den mehreren Steuerungen (5) durch Verschlüsseln eines Datenkommunikationspakets durch eine sendende Steuerung (5) unter Verwendung des öffentlichen Verschlüsselungsschlüssels einer empfangenden Steuerung (5) hergestellt wird und Entschlüsseln des Datenkommunikationspakets bei Empfangen von diesem in der empfangenden Steuerung (5) unter Verwendung des privaten Schlüssels, der in der empfangenden Steuerung (5) gespeichert ist.

2. Verfahren nach Anspruch 1, wobei die zuvor bestimmte Zeitspanne weniger als eine Stunde beträgt.

3. Verfahren nach Anspruch 1, wobei das Abschlussereignis ein Eingeben eines durch einen autorisierten Techniker eingegebenen "sicher"-Befehls ist, der anzeigt, dass ein Handshake-Vorgang, der ein Austauschen öffentlicher Schlüssel zwischen all den Steuerungen (5) beinhaltet, erfolgreich abgeschlossen wurde.

4. Verfahren nach einem der vorhergehenden Ansprüche, wobei für ein Vorbereiten des "Sicherheit vorbereiten"-Befehls eine Autorisierung erforderlich ist.

5. Verfahren nach einem der vorhergehenden Ansprüche, wobei der "Sicherheit vorbereiten"-Befehl durch einen Techniker (15) über Eingeben eines Befehls in eine Mensch-Maschine-Schnittstelle (17) vorbereitet wird, die sich in einem Maschinenraum (13) eines der Aufzüge (3) befindet.

6. Aufzugsgruppe (1), die mehrere Aufzüge (3) umfasst, wobei jeder Aufzug (3) eine Steuerung (5) aufweist, wobei die Steuerungen (5) für ein Ausführen oder Steuern eines Verfahrens nach einem der Ansprüche 1 bis 5 konfiguriert sind.

7. Computerprogrammprodukt, das computerlesbare Anweisungen umfasst, die, wenn sie durch einen Prozessor einer Steuerung (5) in einem Aufzug (3) einer Aufzugsgruppe (1) durchgeführt werden, die Steuerung (5) zu einem Ausführen oder Steuern des Verfahrens nach einem der Ansprüche 1 bis 5 anweisen.

8. Computerlesbares Medium, das ein darauf gespeichertes Computerprogrammprodukt nach Anspruch 7 umfasst.

## Revendications

1. Procédé pour établir une communication de données sécurisée entre une pluralité de dispositifs de commande (5) dans chacun d'une pluralité d'ascenseurs (3) d'un groupe d'ascenseurs (1), la pluralité d'ascenseurs (3) ayant été initialement installés sans qu'aucun chiffrement ne soit établi dans la communication de données entre leurs dispositifs de commande (5), dans lequel avant la mise en service du groupe d'ascenseurs (1), une étape d'établissement de chiffrement (19) est exécutée pour établir le chiffrement de données dans une communication de données future entre la pluralité de dispositifs de commande (5), l'étape d'établissement de chiffrement (19) comprenant :
- le lancement, lors de la réception d'une commande « préparer la sécurité », de la génération d'une paire de clés de chiffrement aléatoire dans chacun des dispositifs de commande (5) du groupe d'ascenseurs (1), la paire de clés de chiffrement comprenant une clé privée et une clé publique ;
- chacun des dispositifs de commande (5) stockant sa clé privée générée dans une zone protégée dans un système de fichiers et annonçant son identité et sa clé publique aux dispositifs de commande (5) de tous les autres ascenseurs (3) du groupe d'ascenseurs (1) ;
- chacun des dispositifs de commande (5) stockant les clés publiques obtenues lors de l'annoncement des autres dispositifs de commande (5) dans le groupe d'ascenseurs (1) ;
- la finalisation de l'étape d'établissement de chiffrement (19) lors de l'expiration d'une période prédéterminée depuis le démarrage de l'étape d'établissement de chiffrement ou l'occurrence d'un événement de finalisation ;
dans lequel, après la finalisation de l'étape d'établissement de chiffrement (19), aucune obtention ni stockage d'autres clés publiques n'est accepté dans chacun des dispositifs de commande (5) et une communication de données future entre la pluralité de dispositifs de commande (5) est établie par chiffrement d'un progiciel de communication de données par un dispositif de commande d'envoi (5) à l'aide de la clé de chiffrement publique d'un dispositif de commande de réception (5) et par déchiffrement du progiciel de communication de données lors de sa réception dans le dispositif de commande de réception (5) à l'aide de la clé privée stockée dans le dispositif de commande de réception (5).

2. Procédé selon la revendication 1, dans lequel la période prédéterminée est inférieure à une heure.

3. Procédé selon la revendication 1, dans lequel l'événement de finalisation est une entrée d'une commande « sécurisé » entrée par un technicien autorisé indiquant qu'un processus d'établissement de liaison comportant l'échange de clés publiques entre tous les dispositifs de commande (5) a été achevé avec succès.

4. Procédé selon l'une des revendications précédentes, dans lequel pour préparer la commande « préparer la sécurité », une autorisation est requise.

5. Procédé selon l'une des revendications précédentes, dans lequel la commande « préparer la sécurité » est préparée par un technicien (15) en entrant une commande dans une interface homme-machine (17) située dans une salle des machines (13) de l'un des ascenseurs (3).

6. Groupe d'ascenseurs (1) comprenant une pluralité d'ascenseurs (3), chaque ascenseur (3) ayant un dispositif de commande (5), les dispositifs de commande (5) étant configurés pour exécuter et commander un procédé selon l'une des revendications 1 à 5.

7. Produit programme informatique comprenant des instructions lisibles par ordinateur qui, lorsqu'elles sont effectuées par un processeur d'un dispositif de commande (5) dans un ascenseur (3) d'un groupe d'ascenseurs (1), ordonnent au dispositif de commande (5) d'exécuter ou de commander le procédé selon l'une des revendications 1 à 5.

8. Support lisible par ordinateur comprenant un produit programme informatique selon la revendication 7 stocké dans celui-ci.
